# EUROPEAN PATENT SPECIFICATION

(11) **EP 3 799 194 B1**
(45) Date of publication and mention of the grant of the patent: **02.03.2022**
(21) Application number: 19862951.1
(22) Date of filing: 12.09.2019
(51) Int. Cl.: H01M 10/6556, H01M 10/613, H01M 50/204, H01M 10/6568, H01M 10/6554

(54) **BATTERY PACK**
BATTERIEPACK
BLOC-BATTERIE

(30) Priority: 21.09.2018 CN 201821555765 U
(43) Date of publication of application: 31.03.2021
(73) Proprietor: Contemporary Amperex Technology Co., Limited, Jiaocheng District Ningde City, Fujian 352100 (CN)
(72) Inventor: HUANG, Xiaoteng, Ningde, Fujian 352100 (CN); HOU, Yuepan, Ningde, Fujian 352100 (CN); GU, Yanlong, Ningde, Fujian 352100 (CN)
(74) Representative: Herrero & Asociados, S.L.
(86) International application number: PCT/CN2019/105650
(87) International publication number: WO 2020/057433

(56) References cited:
- CN-A- 103 098 262
- CN-A- 108 206 256
- CN-U- 208 738 329
- JP-A- 2006 127 921
- KR-A- 20130 113 740
- KR-A- 20160 015 615

## Description

### TECHNICAL FIELD

The invention relates to the technical field of battery packs, and particularly relates to a cooing structure in the battery pack.

### BACKGROUND

For increasing a space utility rate and an energy density in a battery pack, in the prior art, two or more layers of battery units are arranged inside the battery pack in a stacking manner, a corresponding cooling plate is arranged at the bottom of each layer of the battery unit, a cooling pipeline is embedded in the cooling plate, and the cooling pipelines in an upper cooling plate and a lower cooling plate are in communication by means of a connection structure. The cooling plate not only may dissipate heat generated by the battery unit, but also plays a role of supporting the battery unit. However, a problem of poor seal between the connection structure and the cooling pipelines in the upper cooling plate and the lower cooling plate exists, which may cause a hidden danger of cooling liquid leakage, and the upper cooling plate needs to support a weight of the battery unit thereon, such that a problem of insufficient support strength of the upper cooling plate may exist.

CN108206256A discloses a lightweight heat management liquid cooling system of an electric vehicle lithium ion power battery. The lightweight heat management liquid cooling system of the electric vehicle lithium ion power battery comprises a battery bracket arranged on the top and bottom, a battery pack fixed between the battery bracket and a battery control unit; wherein the battery pack comprises a number of cylindrical cells distributed in lines and columns; the upper end and the lower end of the battery bracket are separately fixedly provided with an upper liquid collecting plate and a lower liquid collecting plate; a hollow heat conduction plate contacted with the cylindrical battery surfaces is arranged between the adjacent cylindrical batteries; and the upper interface and the lower interface of the hollow heat conduction plate are separately connected with the upper liquid collecting plate and the lower liquid collecting plate. The lightweight heat management liquid cooling system of the electric vehicle lithium ion power battery has the advantages such as good heat management performance, small power consumption, light weight and so on, which can effectively balance the battery temperature, prolong the battery life and increase the endurance of the electric vehicle.

CN208738329U relates to a battery pack technical field and provides a battery pack, battery pack includes: first cooling plate, inside has cooling channel, the second cooling plate is located first cooling plate top, and inside has cooling channel, a support piece supports interface channel has inside the second cooling plate, a support piece, interface channel inside first cooling plate and the second cooling plate cooling channel sealing connection. This technical scheme supports through a support piece second cooling plate, a support piece support the inside interface channel who is provided with first cooling plate of intercommunication and the inside cooling channel of second cooling plate, because interface channel and support piece formula structure as an organic whole can play good supporting role to a support piece, enable the cooling channel sealing connection in first cooling plate and the second cooling plate again.

KR20160015615A relates to a refrigerant manifold jig which is designed to simultaneously combine a multi-layered cooling pipe equipped in a battery module with a refrigerant manifold comprising a multi-layered injection pipe. More specifically, the purpose of the present invention is to provide the refrigerant manifold jig which can simultaneously combine a multi-layered cooling pipe and a multi-layered injection pipe, leading to precise coupling without damage on the cooling pipe or the injection pipe. The refrigerant manifold jig of the present invention comprises: a jig main body where the refrigerant manifold is fixed so that the injection pipe faces the outside; and a pressurizing member pressurizing the jig main body to allow the refrigerant manifold to be mounted onto the cooling pipe while aligning the injection pipe on the cooling pipe.

JP2006127921A provides a power supply device which can be loaded easily on a vehicle by an extremely simple structure, and which can reduce troubles and cool a battery stably. SOLUTION: The power supply device is provided with a plurality of battery modules 2, a case 1 to house the battery modules 2, a cooling mechanism 3 to cool the battery modules 2 which is housed in the case 1, and a radiator 4 to circulate the refrigerant circulated by this cooling mechanism 3 and cool the refrigerant. In the power supply device, a cavity of a liquid-tight structure is installed at a top cover 5 fixed to the upper face of the case 1, and by coupling this cavity to the cooling mechanism 3 and circulating the refrigerant of the cooling mechanism 3, the top cover 5 is commonly used for the radiator 4 of the refrigerant, and the refrigerant to be circulated in the cooling mechanism is cooled by the top cover 5.

CN103098262A discloses a battery system and a cooling manifold assembly. In order for the battery system and manifold assembly to form a waterproof seal with another connection fitting, a technical effect, in which a manifold member and connection fitting can be coupled so as to each be capable of being easily separated, is provided. Also, in order to form a waterproof seal with heat exchangers, the manifold member may be coupled so as to be easily separable from the ports of the heat exchangers.

KR20130113740A discloses that a coolant manifold for a battery is easily coupled to a distribution hole without the deformation of a coolant pipe even when the center of a distribution hole does not correspond to the center of the distribution hole by the installation allowance. SOLUTION: A coolant manifold for a battery comprises a main body (10) which has an inlet space (11) enabling coolant to flow inside and a distribution hole (13) connected to the coolant pipes (4) of cooling plates, wherein one side of the inlet space is open; a cover (20) which is fixed to the main body, blocks one side of the inlet space, and makes the coolant flow into the inlet space; and a connector (30) which is installed in the distribution hole, connects the coolant pipe to be flowable to the distribution hole.

### SUMMARY

To this end, a battery pack needs to be provided, which can effectively dissipate internal heat and meanwhile can solve the technical problems of poor seal of cooling pipelines in upper and lower cooling plates and insufficient support on the upper cooling plate.

The invention provides a battery pack, which includes
a first cooling plate internally provided with a cooling channel and supporting a first battery unit,
a second cooling plate located above the first cooling plate, internally provided with a cooling channel, and supporting a second battery unit, and the battery pack further comprises
a first support supporting the second cooling plate, wherein the first support is internally provided with a connection channel, and the connection channel and the cooling channels in the first cooling plate and the second cooling plate are in sealed connection;
wherein the battery pack further comprises a first battery unit and and second battery unit, wherein the first battery unit (B1) is placed on the first cooling plate (P1), the second battery unit (B2) is placed on the second cooling plate (P2), and the second cooling plate (P2) is arranged above the first cooling plate (P1), and a height for accommodating the first battery unit (B1) is reserved between the second cooling plate (P2) and the first cooling plate (P1);
the number of the first supports is two, and the two first supports are arranged at two ends of the second cooling plate.

Further, the battery pack includes a second support, the second support supporting the second cooling plate.

Further, the first support includes a support main body and a second connection sheet,
the connection channel extending from one end of the support main body to the other end thereof;
the second connection sheet being fixed at a bottom end of the support main body, and an outer surface of the second connection sheet being provided with a connector or an socket in communication with the connection channel; and
a surface of the first cooling plate is provided with an socket adaptive to the connector or a connector adaptive to the socket, the socket or the connector being in communication with the cooling channel in the first cooling plate.

Further, a seal ring is arranged between the connection channel in the support main body and the second connection sheet.

Further, a surface of the first cooling plate is provided with a first connection sheet, a surface of the first connection sheet being provided with the socket or the connector, and a seal gasket being arranged between the second connection sheet and the first connection sheet.

Further, two sides of the bottom of the first support are provided with a fixing lug separately, the fixing lug being provided with a first fixing hole used for being connected to the first cooling plate, and two sides of an end face of the top of the first support are provided with a second fixing hole used for being connected to the second cooling plate.

Further, a reinforcing rib is arranged between a side of the top of the first support and the second cooling plate.

Further, the first cooling plate includes a top plate and a bottom plate, the top plate and the bottom plate being arranged in an up-down stacking manner, and the top plate partially protruding upwards and/or the bottom plate partially being recessed downwards to form the cooling channel.

Further, the cooling channel includes two or more protrusions arranged at intervals on the top plate, and a recess arranged on the bottom plate and in communication with the two or more protrusions.

Further, the first cooling plate is arranged at the bottom of the battery pack, a first battery unit is placed on the first cooling plate.

Further, the bottom of the battery pack is further provided with a cooling liquid inlet and a cooling liquid outlet connected to the cooling channel in the first cooling plate.

Further, an outer side of the first cooling plate is further provided with a frame and a side plate.

Further, the top plate and the bottom plate are formed by stamping a metal plate.

It is different from the prior art that according to the technical solution, the first support used for supporting the second cooling plate is arranged on the first cooling plate, and the interior of the first support is provided with the connection channel in sealed connection to the cooling channels in the first cooling plate and the second cooling plate; and due to the fact that the connection channel and the first support are of an integrated structure, the first support may be supported well, and the cooling channels in the first cooling plate and the second cooling plate may also be in sealed connection.

### BRIEF DESCRIPTION OF DRAWINGS

Fig. 1 is an internal schematic structural diagram of a battery pack of a particular embodiment;
Fig. 2 is a perspective view, with a battery unit omitted, of the battery pack of the particular embodiment;
Fig. 3 is a schematic structural diagram of a second cooling plate of the particular embodiment;
Fig. 4 is a schematic stereoscopic structural diagram of a first support of the particular embodiment;
Fig. 5 is a schematic stereoscopic diagram of connection between the first support and a first cooling plate as well as the second cooling plate of the particular embodiment;
Fig. 6 is a structural exploded view of the first support of the particular embodiment;
Fig. 7 is a schematic cross-sectional view of a connection relationship between the first support and the first cooling plate as well as the second cooling plate of the particular embodiment;
Fig. 8 is a schematic structural diagram of a second connection sheet of the particular embodiment;
Fig. 9 is a schematic structural diagram of a first connection sheet of the particular embodiment;
Fig. 10 is a schematic structural diagram of a seal gasket of the particular embodiment;
Fig. 11 is a schematic cross-sectional view of a connection relationship between the first support and the first cooling plate of another particular embodiment;
Fig. 12 is a schematic structural diagram of a second connection sheet of another particular embodiment;
Fig. 13 is a schematic structural diagram of a first connection sheet of another particular embodiment.

### Brief Description of the Reference numbers:

- P1.: first cooling plate;
P11. top plate;
P111. protrusion;
P12. bottom plate;
P121. recess;
P122. support protruding point;
P13. first connection sheet;
P131. socket;
P132. bolt through hole;
P133. connector;
- P2.: second cooling plate;
P21 cooling channel;
- L.: first support;
L1. support main body;
L11. connection channel;
L12. fixing lug;
L13. second fixing hole;
L14. first fixing hole;
L2. second connection sheet;
L21. connector;
L22. bolt through hole;
L23. socket;
L3. seal ring;
L4. seal gasket;
L41. avoidance hole;
L42. bolt through hole;
L5. reinforcing rib;
- LP.: second support;
- B1.: first battery unit;
- B2.: second battery unit;
- F1.: frame;
F11. bolt fixing hole;
- F2.: side plate;
- F3.: cross beam;
- 10.: cooling liquid inlet; and
- 11.: cooling liquid outlet.

### DESCRIPTION OF EMBODIMENTS

For explaining the technical content, the construction features, the achieved objectives and the effects of the technical solution in detail, detailed description is made below in combination with specific embodiments and with reference to the accompanying drawings.

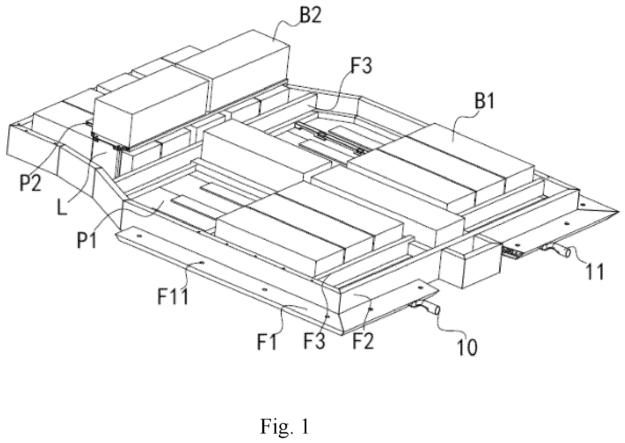

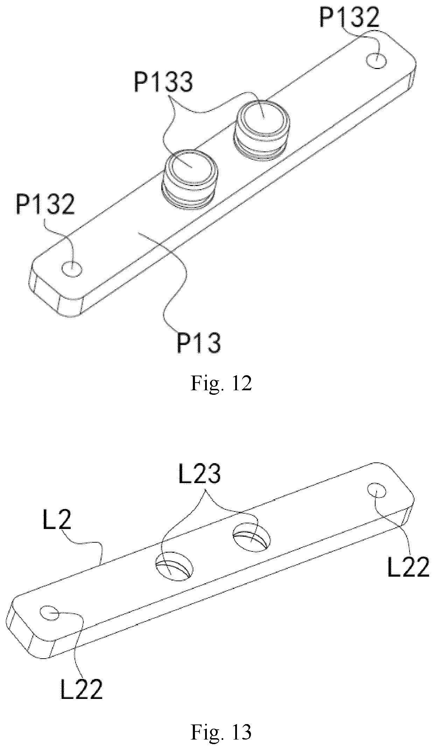

With reference to Figs. 1 to 13, the embodiment provides a battery pack.

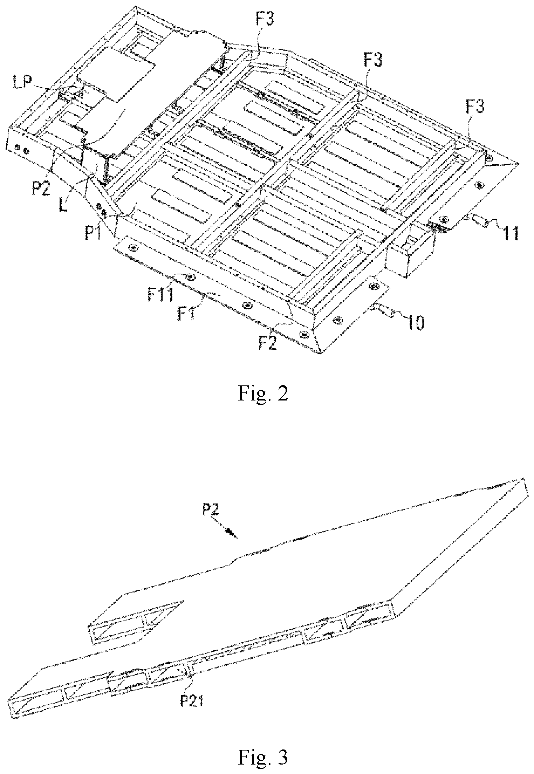

As shown in Fig. 1 and Fig. 2, the battery pack may include a first cooling plate P1, a second cooling plate P2 and a first support L. The first cooling plate P1 is arranged at the bottom of the battery pack, a first battery unit B1 is placed on the first cooling plate P1, the first cooling plate P1 is internally provided with a cooling channel, and cooling liquid may flow in the cooling channel and is used for cooling the battery unit B1. The bottom of the battery pack is further provided with a cooling liquid inlet 10 and a cooling liquid outlet 11 connected to the cooling channel in the first cooling plate P1.

For protecting the first battery unit B1 against influences of external environment factors, an outer side of the first cooling plate P1 may be further provided with a frame F1 and a side plate F2, wherein the case frame F1 may be arranged on two sides of the battery pack in a lengthwise direction, and the frame F1 may be provided with a bolt fixing hole F11 used for fixing the battery pack. The side plate F2 is vertically arranged around the first cooling plate P1, the side plate F2 and the first cooling plate define an accommodating tank for accommodating the first battery unit B1.

As shown in Fig. 2, the second cooling plate P2 is arranged above the first cooling plate P1, and a height for accommodating the first battery unit B1 is reserved between the second cooling plate P2 and the first cooling plate P1. As shown in Fig. 1, a second battery unit B2 is placed on the second cooling plate P2, the second cooling plate P2 is internally provided with a cooling channel similarly so as to cool the second battery unit B2 on the second cooling plate P2.

Certainly, under the condition of a low temperature, the first battery unit B 1 and the second battery unit B2 may also be preheated by means of the first cooling plate P1 and the second cooling plate P2. The first battery unit B1 and the second battery unit B2 may each include at least one battery unit, and may include different numbers of battery units.

Fig. 3 is a schematic structural diagram of the second cooling plate P2 of one embodiment. The middle of the second cooling plate P2 is provided with a plurality of cooling channels P21, and the second cooling plate P2 may preferably be extruded sections of aluminium alloy and other materials. The second cooling plate P2 uses the aluminium alloy extruded section, which may reduce the weight of the second cooling plate and is conducive to lightweight of the battery pack, and meanwhile, the aluminium alloy extruded section has good rigidity, thereby making the second cooling plate P2 provide a sufficient support force for the second battery unit B2.

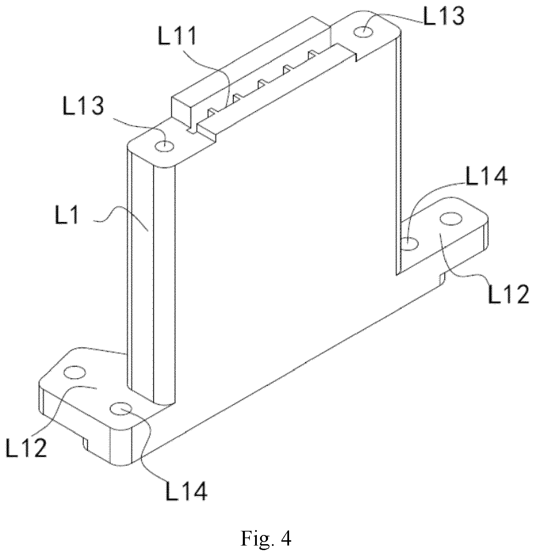

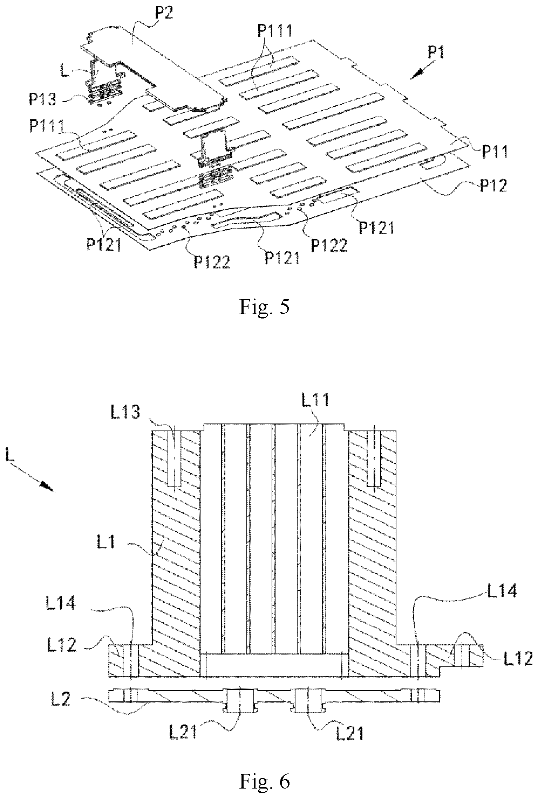

As shown in Figs. 4 to 7, the first support L is arranged on the first cooling plate P1, and is used for supporting the second cooling plate P2 and communicating the cooling channel in the first cooling plate P1 and the cooling channel P21 in the second cooling plate P2, thereby making the cooling liquid in the first cooling plate P1 and the second cooling plate P2 circulate to achieve circulation refrigeration. As shown in Fig. 2 and Fig. 5, the number of the first supports L may be two, and the two first supports L are located at two ends of the second cooling plate P2. The bottom of the first support L is erected on the first cooling plate P1, and the top is connected to the bottom of the second cooling plate P2, and the first support L has good structural rigidity so as to be capable of supporting weights of the second cooling plate P2 and the second battery unit B2 thereon. The first support L is internally provided with a connection channel L11, a bottom end of the connection channel L11 is used for being connected to the cooling channel in the first cooling plate P1, and a top end of the connection channel L11 is used for being connected to the cooling channel P21 in the second cooling plate P2, such that the cooling channels P21 in the first cooling plate P1 and the second cooling plate P2 are in sealed connection by means of the connection channel L11. External cooling liquid may flow in the cooling channel in the first cooling plate P1 by means of the cooling liquid inlet 10 on the first cooling plate P1, and then the cooling liquid may enter the cooling channel P21 in the second cooling plate P2 from a connection channel L11 of one of the first supports L, then returns to the interior of the first cooling plate P1 from a connection channel L11 in the other first support L, and finally flows out of the cooling liquid outlet 11 to exchange heat with a heat exchanger and other heat exchange apparatus then to be recycled.

In the embodiment, the number of the first supports L is two, and as shown in Fig. 2, for further improving a support strength of the second cooling plate P2, a second support LP may be additionally arranged. A top end of the second support LP is connected to the bottom of the second cooling plate P2, the bottom of the second support LP may be fixed to a surface of the first cooling plate P1 or fixed to other structures of the bottom of the battery pack, and the second support LP may be internally provided with no connection channel but merely plays a role in supporting the second cooling plate P2. Optimally, the second support LP may be arranged between the two first supports L and forms a triangular distribution together with the two first supports L, and the triangular structure has a good support degree on each position of the second cooling plate P2 due to good stability.

In other embodiments, no second support LP may be arranged, and the number of the first supports L may be correspondingly adjusted according to a size, a shape and a dimension of the second cooling plate P2, such that the second cooling plate P2 can be supported well, and meanwhile, the cooling channel in the second cooling plate P2 and the cooling channel in the first cooling plate P1 may be in communication.

As shown in Fig. 5, in this embodiment, the first cooling plate P1 may include a top plate P11 and a bottom plate P12, wherein the top plate P11 and the bottom plate P12 may be formed by stamping a metal plate, and the top plate P11 is arranged on an upper surface of the bottom plate P12 in a stacking manner. The top plate P11 partially protrudes upwards to form a protrusion P111 by means of stamping, and the protrusion P111 matches the bottom plate P12 (at the moment the bottom plate may be a flat plate) to form the cooling channel in the first cooling plate P1. Certainly, for preventing the cooling liquid from leaking, edges of the top plate P11 and the bottom plate P12 may be welded or provided with a seal ring or other sealing treatment.

In some embodiments, the bottom plate P12 is partially concave downwards to form a recess by means of stamping, and the recess matches the top plate P11 (at the moment the top plate may be a flat plate) to form the cooling channel in the first cooling plate P1.

As shown in Fig. 5, in this embodiment, the cooling channel in the first cooling plate P1 may be formed by matching the protrusion P111 formed by the top plate P11 protruding upwards partially and the recess P121 formed on the corresponding position, concaved downwards, of the bottom plate P12. For improving the cooling efficiency of the first cooling plate P1, the protrusion P111 may be preferably a rectangular protrusion with a plane surface, and the protrusion P111 is located below each battery unit of the first battery unit B1, such that the surface of the protrusion P111 can make contact with the bottom of the first battery unit B1 to directly carry out heat exchange. The protrusion P111 is a rectangular protrusion, such that a contact area between the protrusion and the bottom of the battery unit is increased, and then the heat exchange efficiency between the protrusion of the battery unit is improved.

The first cooling plate P1 is composed of the top plate P11 and the bottom plate P12 in the stacking manner, the cooling channel in the first cooling plate is formed by stamping the top plate P11 and the bottom plate P12, a structure of the first cooling plate P11 is simpler, and no additional cooling pipeline needs to be arranged, such that the weight of the first cooling plate P1 is reduced and the objective of lightweight is achieved, and when the battery pack is applied to a new-energy vehicle, the vehicle weight may be reduced, and an endurance mileage is prolonged.

Optimally, as shown in Fig. 1 and Fig. 2, in this embodiment, the first battery unit B1 on the first cooling plate P1 has two or more columns of battery units arrange side by side, and for guaranteeing a structure strength of the battery pack in a width direction, a cross beam F3 is arranged in the battery pack, and the cross beam F3 is located between the adjacent two columns of the battery units. As shown in Fig. 5, the two or more protrusions P111 are arranged on the top plate at intervals, the accommodating tank for accommodating the battery unit is provided in the protrusion P111, the two or more recesses P121 is arranged in the bottom plate, and the recess P121 is in communication with the protrusion P111, wherein one end of the recess P121 is in communication with one of the protrusions P111, and the other end thereof is in communication with the other protrusion P111. Therefore, the protrusion P111 and the recess P121 are in communication with each other to form the cooling channel in the cooling plate P1. The protrusions P111 are arranged at intervals, compared Fig. 2 with Fig. 5, it can be seen that the position provided with the cross beam F3 is provided with no protrusion P111, but the recess P121 on the bottom plate P12 is in communication with the protrusion P111 to make the cooling liquid flow. The protrusion P111 using this structure may increase the contact area between the cooling channel and the battery unit so as to guarantee the cooling efficiency, the recess P121 is concave downwards in the bottom plate direction and does not occupy a space of the battery accommodating tank, an installation space is reserved for the cross beam F3, and the space in the battery accommodating tank is fully used, such that the energy density of the battery pack can be improved.

As shown in Fig. 5, a plurality of support protruding points P122 are further arranged on the bottom plate P12, and the support protruding point P122 is arranged on the position, corresponding to the protrusion P111 on the top plate P11, of the bottom plate P12. When the top plate P11 overlaps the bottom plate P12, the support protruding point P122 is exactly located in a cavity formed by the protrusion P111, the top of the support protruding point P122 may make contact with the top of an inner wall of the protrusion P111, thereby playing a role in supporting the protrusion P111, and the support protruding point P122 is located in the protrusion P111, thereby playing a role in guiding the cooling liquid simultaneously.

Certainly, in some other embodiments, the cooling channels in the first cooling plate P1 and the second cooling plate P2 may be cooling pipelines embedded in the first cooling plate P1 and the second cooling plate P2, and the cooling pipeline may coil in the cooling plate.

As shown in Fig. 4 and Fig. 6, Fig. 4 is an entire schematic structural diagram of the first support L, and Fig. 6 is a structure splitting diagram of the first support L. The first support includes a support main body L1 and a second connection sheet L2. The support main body L1 is of a plate-shaped structure, may be formed by extruding aluminium alloy, magnesium alloy and other light and high-strength materials, and plays a role in supporting the second cooling plate P2. Certainly, in other embodiments, the support main body L1 may also be of a column-shaped structure. The connection channel L11 extends from one end of the support main body L1 to the other end thereof, and for guaranteeing a flow rate of the cooling liquid, two or more connection channels may be arranged in the support main body L1 side by side. The second connection sheet L2 is fixed at a bottom end of the support main body L1, and is used for being connected to the cooling channel in the first cooling plate P1.

As shown in Fig. 6, two sides of the bottom of the support main body L1 are provided with fixing lugs L12 separately, the fixing lug L12 being provided with a first fixing hole L14 used for being connected to the first cooling plate P1 by means of a bolt, and two sides of an end face of the top of the first support L are provided with second fixing holes L13 used for being connected to the second cooling plate P2 by means of bolts.

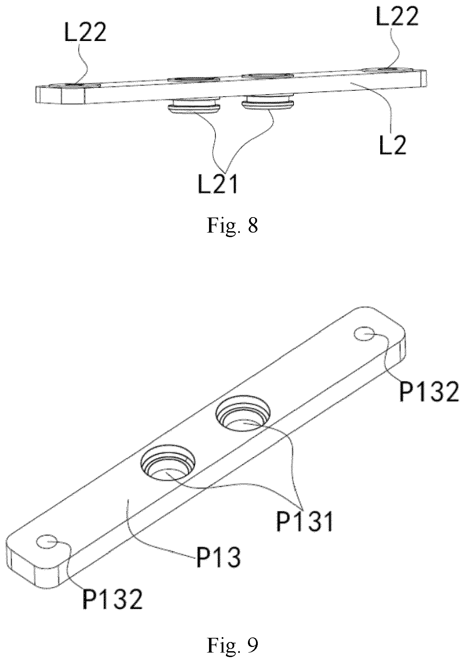

Fig. 8 shows a schematic structural view of the second connection sheet L2, specifically, a position, corresponding to the connection channel L11, of the second connection sheet L2 is provided with a through hole penetrating upper and lower surfaces of the second connection sheet L2, a connector L21 convex downwards is arranged on a position, located at the through hole, of an outer surface (a surface away from the support main body LI) of the second connection sheet L2, and the connector L21 is used for being connected to the socket P131 arranged on the upper surface of the first cooling plate P1 and in communication with the internal connection channel. Two ends of the second connection sheet L2 are further provided with bolt through holes L22 corresponding to the first fixing holes L14. In this embodiment, the second connection sheet L2 is provided with the two connectors L21 and the corresponding through holes. The number of the connector L21 and the number of the bolt through hole L22 may be increased or decreased according to requirements on a flow rate of the cooling liquid, for example, in some embodiments, only one connector L21 and one bolt through hole L22 need to be arranged to meet the requirements; and in other embodiments, the requirements on the flow rate of the cooling liquid is high, such that the connector L21 and the bolt through hole L22 need to be provided with three or more.

The second connection sheet L2 may be fixed to a lower end face of the support main body L1 by means of a welding manner. In some embodiments, the second connection sheet L2 may be fixed to the lower end face of the support main body L1 in a locking manner by selecting a bolt, a rivet and other fixing member.

As shown in Fig. 6, for guaranteeing connection sealing between the second connection sheet L2 and the support main body L1 and preventing the cooling liquid from leaking. In this embodiment, a seal ring L3 is further arranged between the second connection sheet L2 and the support main body L1. The seal ring L3 is arranged between the second connection sheet L2 and the support main body L1, and the position of the seal ring L3 corresponds to the position of the through hole in the second connection sheet L2.

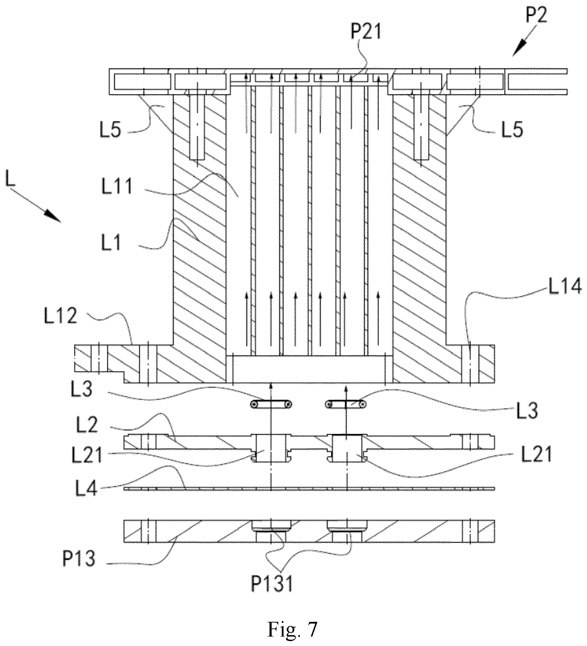

As shown in Fig. 6 and Fig. 7, Fig. 7 is a schematic diagram of connection between the first support L and the first cooling plate P1 as well as the second cooling plate P2. A first connection sheet P13 is arranged on the upper surface (not shown in the figure) of the first cooling plate P1, Fig. 9 is a schematic structural diagram of the first connection sheet P13 which may be fixed to the upper surface of the first cooling plate P1 by means of a welding manner, etc., an socket P131 is arranged in an upper surface of the first connection sheet P13, and the socket P131 is adaptive to the connector L21 on the second connection sheet L2 and is in communication with the cooling channel in the first cooling plate P1. Two ends of the first connection sheet P13 are provided with bolt through holes P132 corresponding to the first fixing holes L14.

As shown in Fig. 7, the first support L may be fixedly connected to the first cooling plate P1 and the second cooling plate P2 by means of cooperation between the bolt and the second fixing hole L13 as well as the first fixing hole L14. The bolt penetrates the second cooling plate P2 to match the second fixing hole L13 at the top of the first support L, such that the top of the first support L may be fixedly connected to the second cooling plate P2. A top end of the connection channel L11 in the first support L is in communication with the cooling channel P21 in the second cooling plate P2. Optimally, for improving the connection strength between the second cooling plate P2 and the top of the first support L, a reinforcing rib L5 may be further arranged between a side of the top of the first support L and the second cooling plate P2 in a welding manner.

The bolt penetrates the first cooling plate P1, the first connection sheet P13 and the second connection sheet L2 in sequence to match the first fixing hole L14 at the bottom of the first support L, such that the bottom of the first support L may be fixedly connected to the first cooling plate P1. The connector L21 of the first support L is in communication with the cooling channel in the first cooling plate P1.

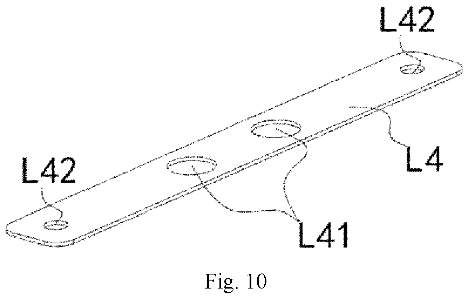

When the bottom of the first support L is fixedly connected to the first cooling plate P1, the connector L21 on the second connection sheet L2 is connected to the socket P131, such that the connection channel L11 in the first support L is in communication with the cooling channel in the first cooling plate P1. For improving the connection sealing between the second connection sheet L2 and the first connection sheet P13, a seal gasket L4 is further arranged between the second connection sheet L2 and the first connection sheet P13. Fig. 10 is a schematic structural diagram of the seal gasket L4. An avoidance hole L41 corresponding to the connector L21 is arranged in the middle of the seal gasket L4, and two ends of the seal gasket L4 are provided with bolt through holes L42 corresponding to the first fixing holes L14.

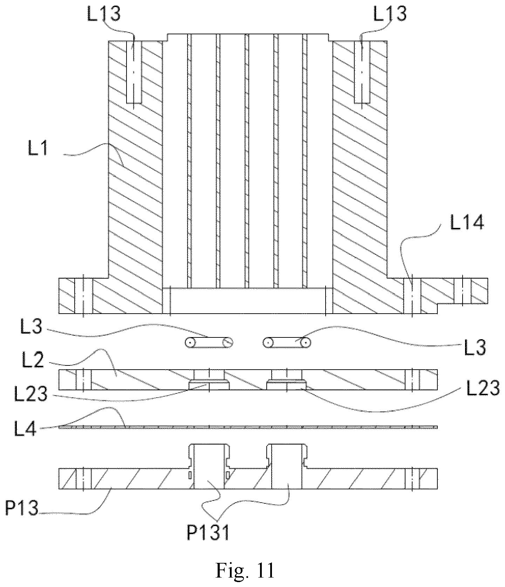

As shown in Fig. 11 to Fig. 13, another embodiment is provided, in this embodiment, structures of the second connection sheet L2 and the first connection sheet P13 are different from that in the above embodiments, and other structures are the same as that in the above embodiments. In the above mentioned embodiments, a lower surface of the second connection sheet L2 is provided with a connector L21 convex downwards, an upper surface of the first connection sheet P13 on the first cooling plate P1 is provided with a socket P131, and communication between the cooling channel in the first cooling plate P1 and the connection channel in the first support L is achieved by means of cooperation between the connector L21 and the socket P131. In this embodiment, the positions of the connector L21 and the recess P121 is exchanged, as shown in Fig. 11, the connector P131 is arranged on the first connection sheet P13, and the socket L23 is arranged on the second connection sheet L2, such that communication between the cooling channel in the first cooling plate P1 and the connection channel in the first support L is also achieved by means of cooperation between the connector P131 and the socket L23.

It should be noted that although the various embodiments mentioned above have been described herein, the scope of patent protection for the invention is not therefore limited. The scope of protection is defined by the claims.

## Claims

1. Battery pack, comprising:
a first cooling plate (P1) internally provided with a cooling channel;
a second cooling plate (P2) located above the first cooling plate (P1) and internally provided with a cooling channel; and
**characterized in that**, the battery pack further comprises
a first support (L) supporting the second cooling plate (P2),
wherein the first support (L) is internally provided with a connection channel (L11), and the connection channel (L11)and the cooling channels in the first cooling plate (P1) and the second cooling plate (P1) are in sealed connection;
wherein the battery pack further comprises a first battery unit (B1) and a second battery unit (B2), wherein the first battery unit (B1) is placed on the first cooling plate (P1), the second battery unit (B2) is placed on the second cooling plate (P2), and the second cooling plate (P2) is arranged above the first cooling plate (P1), and a height for accommodating the first battery unit (B1) is reserved between the second cooling plate (P2) and the first cooling plate (P1);
wherein the number of the first supports (L) is two, and the two first supports (L) are arranged at two ends of the second cooling plate (P2).

2. Battery pack according to claim 1, wherein the battery pack further comprises a second support (LP), the second support (LP) supporting the second cooling plate (P2).

3. Battery pack according to claim 1, wherein the first support (L) comprises a support main body (L1) and a second connection sheet (L2),
the connection channel (L11) extending from one end of the support main body (L1) to the other end thereof;
the second connection sheet (L2) being fixed at a bottom end of the support main body (L1), and an outer surface of the second connection sheet (L2)being provided with a connector (P133) or an socket (P131) in communication with the connection channel (L11); and
the first cooling plate (P1) is provided with an socket (P131) adaptive to the connector (P133) or a connector (P133) adaptive to the socket (P131), the socket (P131) or the connector (P133) being in communication with the cooling channel in the first cooling plate (P1).

4. Battery pack according to claim 3, wherein a seal ring (L3) is arranged between the connection channel (L11) in the support main body (L1) and the second connection sheet (L2).

5. Battery pack according to claim 3, wherein a surface of the first cooling plate (P1) is provided with a first connection sheet (P13), a surface of the first connection sheet (P13) being provided with the socket (P131) or the connector (P133), and a seal gasket (L4) being arranged between the second connection sheet (L2) and the first connection sheet (P13).

6. Battery pack according to claim 1, wherein two sides of the bottom of the first support (L) are provided with a fixing lug (L12) separately, the fixing lug (L12) being provided with a first fixing hole (L14) used for being connected to the first cooling plate (P1), and two sides of an end face of the top of the first support (L) are provided with a second fixing hole (L13) used for being connected to the second cooling plate (P2).

7. Battery pack according to claim 6, wherein a reinforcing rib (L5) is arranged between a side of the top of the first support (L) and the second cooling plate (P2).

8. Battery pack according to claim 1, wherein the first cooling plate (P1) comprises a top plate (P11) and a bottom plate (P12), the top plate (P11) and the bottom plate (P12) being arranged in an up-down stacking manner, and the top plate (P11) partially protruding upwards and/or the bottom plate (P12) partially being recessed downwards to form the cooling channel.

9. Battery pack according to claim 8, wherein the cooling channel comprises two or more protrusions (P111) arranged at intervals on the top plate (P11), and a recess (P121) arranged on the bottom plate (P12) and in communication with the two or more protrusions (P111).

10. Battery pack according to claim 1, wherein the first cooling plate (P1) is arranged at the bottom of the battery pack, a first battery unit (B1) is placed on the first cooling plate (P1).

11. Battery pack according to claim 1, wherein the bottom of the battery pack is further provided with a cooling liquid inlet (10) and a cooling liquid outlet (11) connected to the cooling channel in the first cooling plate (P1).

12. Battery pack according to claim 1, an outer side of the first cooling plate (P1) is further provided with a frame (F1) and a side plate (F2).

13. Battery pack according to claim 8, wherein the top plate (P11) and the bottom plate (P12) are formed by stamping a metal plate.

## Patentansprüche

1. Batteriepack, umfassend:
eine erste Kühlplatte (P1), die innen mit einem Kühlkanal versehen ist, eine zweite Kühlplatte (P2), die sich über der ersten Kühlplatte (P1) befindet und innen mit einem Kühlkanal versehen ist, und
**dadurch gekennzeichnet ist, dass**
der Batteriepack ferner einen ersten Träger (L) umfasst, der die zweite Kühlplatte (P2) trägt,
wobei der erste Träger (L) innen mit einem Verbindungskanal (L11) versehen ist und der Verbindungskanal (L11) und die Kühlkanäle in der ersten Kühlplatte (P1) und der zweiten Kühlplatte (P2) in abgedichteter Verbindung stehen,
wobei der Batteriepack ferner eine erste Batterieeinheit (B1) und eine zweite Batterieeinheit (B2) umfasst, wobei die erste Batterieeinheit (B1) auf der ersten Kühlplatte (P1) angeordnet ist, die zweite Batterieeinheit (B2) auf der zweiten Kühlplatte (P2) angeordnet ist und die zweite Kühlplatte (P2) über der ersten Kühlplatte (P1) angeordnet ist und eine Höhe zur Aufnahme der ersten Batterieeinheit (B1) zwischen der zweiten Kühlplatte (P2) und der ersten Kühlplatte (P1) reserviert ist,
wobei die Anzahl der ersten Träger (L) zwei ist, und die zwei ersten Träger (L) an zwei Enden der zweiten Kühlplatte (P2) angeordnet sind.

2. Batteriepack nach Anspruch 1, bei welchem der Batteriepack ferner einen zweiten Träger (LP) umfasst, wobei der zweite Träger (LP) die zweite Kühlplatte (P2) trägt.

3. Batteriepack nach Anspruch 1, bei welchem der erste Träger (L) einen Trägerhauptkörper (L1) und eine zweite Verbindungsplatte (L2) umfasst, wobei sich der Verbindungskanal (L11) von einem Ende des Trägerhauptkörpers (L1) zu dessen anderem Ende erstreckt,
wobei die zweite Verbindungsplatte (L2) an einem unteren Ende des Trägerhauptkörpers (L1) befestigt ist und eine Außenfläche der zweiten Verbindungsplatte (L2) mit einem Verbinder (P133) oder einer Buchse (P131) in Verbindung mit dem Verbindungskanal (L11) versehen ist und
die erste Kühlplatte (P1) mit einer Buchse (P131), die an den Verbinder (P133) anpassbar ist, oder einem Verbinder (P133), der an die Buchse (P131) anpassbar ist, versehen ist, wobei die Buchse (P131) oder der Verbinder (P133) mit dem Kühlkanal in der ersten Kühlplatte (P1) in Verbindung steht.

4. Batteriepack nach Anspruch 3, bei welchem ein Dichtungsring (L3) zwischen dem Verbindungskanal (L11) im Trägerhauptkörper (L1) und der zweiten Verbindungsplatte (L2) angeordnet ist.

5. Batteriepack nach Anspruch 3, bei welchem eine Oberfläche der ersten Kühlplatte (P1) mit einer ersten Verbindungsplatte (P13) versehen ist, wobei eine Oberfläche der ersten Verbindungsplatte (P13) mit der Buchse (P131) oder dem Verbinder (P133) versehen ist, und wobei eine Dichtung (L4) zwischen der zweiten Verbindungsplatte (L2) und der ersten Verbindungsplatte (P13) angeordnet ist.

6. Batteriepack nach Anspruch 1, bei welchem zwei Seiten der Unterseite des ersten Trägers (L) separat mit einer Befestigungslasche (L12) versehen sind, wobei die Befestigungslasche (L12) mit einem ersten Befestigungsloch (L14) versehen ist, das zur Verbindung mit der ersten Kühlplatte (P1) verwendet wird, und zwei Seiten einer Endfläche der Oberseite des ersten Trägers (L) mit einem zweiten Befestigungsloch (L13) versehen sind, das zur Verbindung mit der zweiten Kühlplatte (P2) verwendet wird.

7. Batteriepack nach Anspruch 6, bei welchem eine Verstärkungsrippe (L5) zwischen einer Seite der Oberseite des ersten Trägers (L) und der zweiten Kühlplatte (P2) angeordnet ist.

8. Batteriepack nach Anspruch 1, bei welchem die erste Kühlplatte (P1) eine obere Platte (P11) und eine untere Platte (P12) umfasst, wobei die obere Platte (P11) und die untere Platte (P12) von oben nach unten gestapelt angeordnet sind und die obere Platte (P11) teilweise nach oben ragt und/oder die untere Platte (P12) teilweise nach unten vertieft ist, um den Kühlkanal zu bilden.

9. Batteriepack nach Anspruch 8, bei welchem der Kühlkanal zwei oder mehrere Vorsprünge (P111), die in Abständen auf der oberen Platte (P11) angeordnet sind, und eine Aussparung (P121) umfasst, die auf der unteren Platte (P12) angeordnet ist und mit den zwei oder mehreren Vorsprüngen (P111) in Verbindung steht.

10. Batteriepack nach Anspruch 1, bei welchem die erste Kühlplatte (P1) an der Unterseite des Batteriepacks angeordnet ist und eine erste Batterieeinheit (B1) auf der ersten Kühlplatte (P1) angeordnet ist.

11. Batteriepack nach Anspruch 1, bei welchem die Unterseite des Batteriepacks ferner mit einem Kühlflüssigkeitseinlass (10) und einem Kühlflüssigkeitsauslass (11) versehen ist, die mit dem Kühlkanal in der ersten Kühlplatte (P1) verbunden sind.

12. Batteriepack nach Anspruch 1, bei welchem eine Außenseite der ersten Kühlplatte (P1) ferner mit einem Rahmen (F1) und einer Seitenplatte (F2) versehen ist.

13. Batteriepack nach Anspruch 8, bei welchem die obere Platte (P11) und die untere Platte (P12) durch Stanzen einer Metallplatte gebildet sind.

## Revendications

1. Bloc-batterie, comprenant :
une première plaque de refroidissement (P1) pourvue intérieurement d'un canal de refroidissement ;
une seconde plaque de refroidissement (P2) située au-dessus de la première plaque de refroidissement (P1) et pourvue intérieurement d'un canal de refroidissement ; et
**caractérisé en ce que** le bloc-batterie comprend en outre
un premier support (L) supportant la seconde plaque de refroidissement (P2),
dans lequel le premier support (L) est pourvu intérieurement d'un canal de raccordement (L11), et le canal de raccordement (L11) et les canaux de refroidissement dans la première plaque de refroidissement (P1) et la seconde plaque de refroidissement (P1) sont en raccordement étanche ;
dans lequel le bloc-batterie comprend en outre une première unité de batterie (B1) et une seconde unité de batterie (B2), dans lequel la première unité de batterie (B1) est placée sur la première plaque de refroidissement (P1), la seconde unité de batterie (B2) est placée sur la seconde plaque de refroidissement (P2), et la seconde plaque de refroidissement (P2) est agencée au-dessus de la première plaque de refroidissement (P1), et une hauteur pour accueillir la première unité de batterie (B1) est réservée entre la seconde plaque de refroidissement (P2) et la première plaque de refroidissement (P1) ;
dans lequel le nombre des premiers supports (L) est de deux, et les deux premiers supports (L) sont agencés à deux extrémités de la seconde plaque de refroidissement (P2).

2. Bloc-batterie selon la revendication 1, dans lequel le bloc-batterie comprend en outre un second support (LP), le second support (LP) supportant la seconde plaque de refroidissement (P2).

3. Bloc-batterie selon la revendication 1, dans lequel le premier support (L) comprend un corps principal de support (L1) et une seconde feuille de raccordement (L2),
le canal de raccordement (L11) s'étendant depuis une extrémité du corps principal de support (L1) jusqu'à son autre extrémité ;
la seconde feuille de raccordement (L2) étant fixée à une extrémité de dessous du corps principal de support (L1), et une surface extérieure de la seconde feuille de raccordement (L2) étant pourvue d'un raccord (P133) ou d'une douille (P131) en communication avec le canal de raccordement (L11) ; et
la première plaque de refroidissement (P1) est pourvue d'une douille (P131) adaptée au raccord (P133) ou d'un raccord (P133) adapté à la douille (P131), la douille (P131) ou le raccord (P133) étant en communication avec le canal de refroidissement dans la première plaque de refroidissement (P1).

4. Bloc-batterie selon la revendication 3, dans lequel une bague d'étanchéité (L3) est agencée entre le canal de raccordement (L11) dans le corps principal de support (L1) et la seconde feuille de raccordement (L2).

5. Bloc-batterie selon la revendication 3, dans lequel une surface de la première plaque de refroidissement (P1) est pourvue d'une première feuille de raccordement (P13), une surface de la première feuille de raccordement (P13) étant pourvue de la douille (P131) ou du raccord (P133), et un joint d'étanchéité (L4) étant agencé entre la seconde feuille de raccordement (L2) et la première feuille de raccordement (P13).

6. Bloc-batterie selon la revendication 1, dans lequel deux côtés du dessous du premier support (L) sont pourvus d'une patte de fixation (L12) séparément, la patte de fixation (L12) étant pourvue d'un premier trou de fixation (L14) utilisé pour être raccordé à la première plaque de refroidissement (P1), et deux côtés d'une face d'extrémité du dessus du premier support (L) sont pourvus d'un second trou de fixation (L13) utilisé pour être raccordé à la seconde plaque de refroidissement (P2).

7. Bloc-batterie selon la revendication 6, dans lequel une nervure de renforcement (L5) est agencée entre un côté du dessus du premier support (L) et la seconde plaque de refroidissement (P2).

8. Bloc-batterie selon la revendication 1, dans lequel la première plaque de refroidissement (P1) comprend une plaque de dessus (P11) et une plaque de dessous (P12), la plaque de dessus (P11) et la plaque de dessous (P12) étant agencées en empilement de haut en bas, et la plaque de dessus (P11) faisant partiellement saillie vers le haut et/ou la plaque de dessous (P12) étant partiellement évidée vers le bas pour former le canal de refroidissement.

9. Bloc-batterie selon la revendication 8, dans lequel le canal de refroidissement comprend deux saillies (P111) ou plus agencées à des intervalles sur la plaque de dessus (P11), et un évidement (P121) agencé sur la plaque de dessous (P12) et en communication avec les deux saillies (P111) ou plus.

10. Bloc-batterie selon la revendication 1, dans lequel la première plaque de refroidissement (P1) est agencée au niveau du dessous du bloc-batterie, une première unité de batterie (B1) est placée sur la première plaque de refroidissement (P1).

11. Bloc-batterie selon la revendication 1, dans lequel le dessous du bloc-batterie est en outre pourvu d'une entrée de liquide de refroidissement (10) et d'une sortie de liquide de refroidissement (11) raccordées au canal de refroidissement dans la première plaque de refroidissement (P1).

12. Bloc-batterie selon la revendication 1, un côté extérieur de la première plaque de refroidissement (P1) est en outre pourvu d'un cadre (F1) et d'une plaque de côté (F2).

13. Bloc-batterie selon la revendication 8, dans lequel la plaque de dessus (P11) et la plaque de dessous (P12) sont formées par estampillage d'une plaque de métal.
